Europäisches Patentamt

European Patent Office

Office européen des brevets

(19)

(11) Publication number: **0 277 464**

**A1**

(12) # EUROPEAN PATENT APPLICATION

(21) Application number: **87830417.9**

(51) Int. Cl.4: **E04H 6/22**

(22) Date of filing: **23.11.87**

(30) Priority: **04.02.87 IT 333887**

(43) Date of publication of application:
**10.08.88 Bulletin 88/32**

(84) Designated Contracting States:
**AT BE CH DE ES FR GB GR LI NL SE**

(71) Applicant: **Battistini, Marino**
**Viale Masini n. 4**
**I-40126 Bologna(IT)**

(72) Inventor: **Battistini, Marino**
**Viale Masini n. 4**
**I-40126 Bologna(IT)**

(74) Representative: **Dall'Olio, Giancarlo**
**INVENTION s.n.c. Via Arienti 26**
**I-40124 Bologna(IT)**

(54) **Perfected multistory apparatus for automatically storing various articles, particularly vehicles.**

(57) In the loading station 1, every article 100 is placed upon a storage surface 14, beneath which a carriage 8 is positioned; when the loading surface 8a of the latter is raised it lifts the storage surface such that it is supported by the carriage 8.

The carriage, which can be fitted with independent motor means, is sent to a storage area 6 located on a particular floor; the movement of the carriage, and related storage surface - motor vehicle complex, from one floor to another is effected by means of hoists 4.

Lowering the loading surface 14 of the carriage enables the storage surface 14 and corresponding motor vehicle to be deposited on the spacers 14 in the abovementioned storage area 6.

The article is unloaded from the storage system in the reverse manner to that described above.

The storage system is controlled by a fixed computerised central unit 150, which operates in conjunction with peripheral units 29 that are situated on the carriages 8 and connected to the central unit by means of a radio connection, or by the central unit alone, connected to the operating means by cables, or else by an electronic control unit featuring keyboard controls, and connected by cables to the operating means.

FIG. 5

## "AUTOMATIC HANDLING MULTI-STOREY STORAGE SYSTEM FOR ARTICLES OF DIFFERENT TYPES, AND MOTOR VEHICLES IN PARTICULAR"

The storage of different type of articles, e.g.: motor vehicles, is today effected using a variety of different technical solutions and/or operating systems.

Crates, containers and/or boxes containing the articles can, for example, be stacked manually; it being obvious that such procedures are, however, only suitable for storage systems of limited capacity.

The use of pallets, of the self-supporting type, for example, containing the various different types of articles and/or products has made it possible to achieve self-supporting columns of upto several metres high (e.g.: 8-10 metres); the pallets are handled using suitable means, such as fork lift trucks, for example.

The above enjoy widespread use in the storage of fruit and vegetable products, meat and deep-frozen products, and mass-produced consumer food products, etc.

The use of operators for driving the fork lift trucks, and the operating tiomes required for moving the elementary product unit have a negative effect on the total storage costs. In addition to this, the fact that not only is specialist manpower required, but that it is also often necessary to operate in low temperature environments (e.g.: industrial refrigerators), makes it difficult to find operators.

A known technical solution enables the automation of those stages in which the articles are loaded into and unloaded from the storage system.

The storage system comprises two shelving units between which operates a crane that can be moved longitudinally and vertically, featuring a carriage that can be moved in at least the transverse plane: in this way the operating means of the carriage used to handle the articles (e.g.: pallets or crates) are able to move through three coordinates.

Every article can thus be inserted in a corresponding vacant space in one of the two shelving units; the unloading (withdrawal) of the article from this space taking place in the reverse manner to the above.

The operating times offered by this system are in no way exceptional, and are without doubt insufficient to justify the overall cost of the plant.

The storage (parking of motor vehicles is, in addition to systems using one or more storeys to which access is gained by means of ramps, with the engine on, and all the disadvantages this involves, also effected using technical solutions which enable the automation of the various different operations involved.

A known solution is an adaption of the storage system comprising two shelving units with a crane bewteen them, referred to above. In this case the crane chassis features two carriages each of which is designed to first raise the front, or rear, axle of the motor vehicle at ground level, and then load the latter onto the carriage. As soon as the latter is positioned by the space alloted it, the carriage unloads the motor vehicle into it, operating in the reverse manner.

The same operating stages are repeated in reverse order for the withdrawal of the motor vehicle.

A variation on the solution described above features a slightly upward-sloping roller track in each of the shelving spaces upon which the article is pushed; suitable stop means being employed to prevent the article from accidentally sliding out of its allotted space.

As a result of the above, the article is withdrawn under the action of "gravity".

The structures, operating means and dimensions of the two above-mentioned solutions lead one to the conclusion that these forms of storage may be incorporated in "industrial plants", but are largely unsuitable for use in urban centres.

The loading and unloading times demanded by the above-mentioned automatic storage systems are not commercially acceptable; this, together with high building and running costs, has discouraged their use by private enterprise and public bodies, such that although the said technical solutions have been known for several years, automatic storage systems of the type considered above are still only rarely to be found in use today.

The technical objective of the present invention is to propose an automatic handling storage system able to achieve lower loading and unloading times to and from itself than it has so far been possible to obtain, and at lower building and running costs, for the same number of articles handled, than that of current automatic storage systems.

A further objective of the invention is to propose a storage system suitable for any type of article, and for motor vehicles in particular, the operating efficiency of which is independent of any particular vertical or horizontal layout and capacity.

Finally, a last, although not unimportant, objective of the invention is to propose a storage system in which the operating means can, if required, be controlled and/or driven by a computerised unit.

The above-mentioned objectives of the invention are obtained by means of a perfected multi-storey automatic handling storage system for articles of various kinds, and motor vehicles in particular, characterised by the fact that it includes: a fixed load-bearing structure comprising several superimposed storeys that communicate with one another by means of vertical chambers, with one of the aforesaid storeys having access from and to the outside by means of two stations, respectively for loading and unloading articles into and from the aforesaid storage system, located in a raised position in relation to the said storey, the said storeys being divided into storage areas for receiving the articles which are positioned one either side and/or to one side of corresponding passageways; a series of carriages, with each carriage featuring independent means for driving it in any direction, as well as means for moving the related loading surface between two extreme positions, raised and lowered respectively; a large number of storage surfaces equal to at least the same number as there are of the said storage areas above; conveying means situated in the said chambers, that can be moved in both directions in the vertical plane, designed to form platforms, with the said conveying means being driven intermittently to position the related platforms so that they are coplanar to the above-mentioned storeys; first and second sensor means for the abovementioned carriages and aforesaid passageways respectively, that are designed to monitor the cordinates of each carriage; third sensor means for monitoring the presence of articles in the said storage areas; fourth and fifth sensor means for detecting the presence of articles in the said stations; sixth sensor means for monitoring the coplanarity of the said platforms to the aforesaid storeys; a central computerised unit that works in conjunction with the said sensors and is designed to control the aforesaid means each carriage is designed to include, as well as the above-mentioned conveying means.

The characteristics of the invention which have not emerged from the above are emphasised hereinafter with specific reference to the enclosed tables of drwaings, in which:

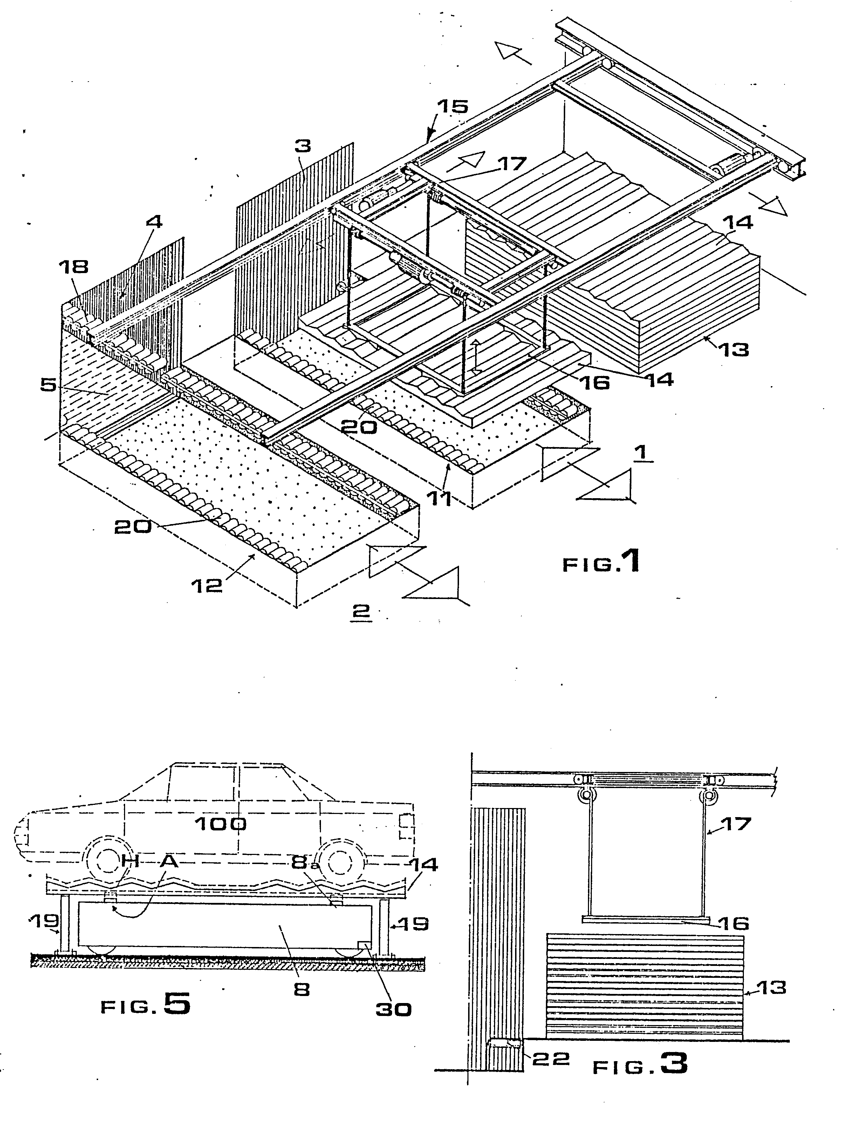

- Fig. 1 is a diagrammatic view in perspective of one possible form in which the storage system loading and unloading stations could be built;

- Fig. 2 is a diagrammatic plan of the above-mentioned stations;

- Fig. 3 is a partial side view of the magazine for the storage surfaces, as well as the means for conveying them;

- Fig. 4 is a diagrammatic plan of one storey of the storage system;

- Fig. 5 illustrates section I-I in Fig. 4.

- Figs. 6 and 7 illustrate the sections in a vertical plane of two different embodiments of a hoist as in the present storage system;

- Fig. 8 illustrates a possible block diagram of the electric-electronic units for monitoring and controlling the operating means of the storage system.

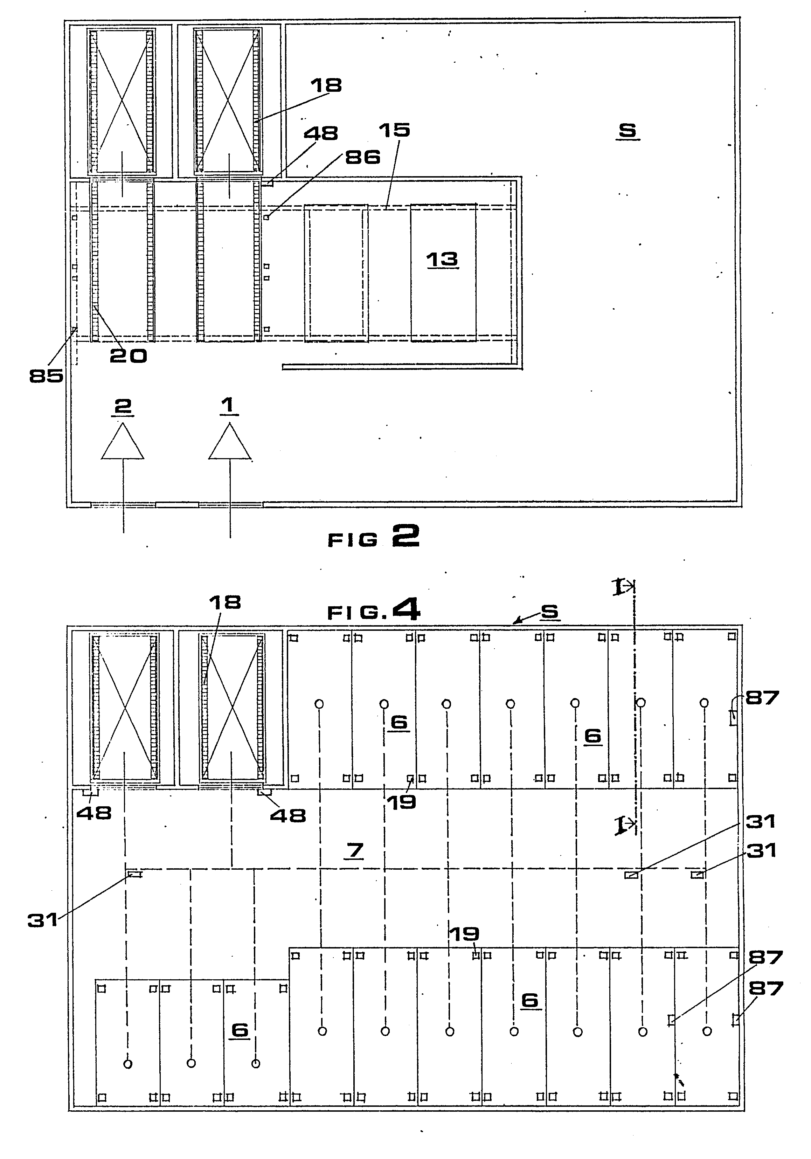

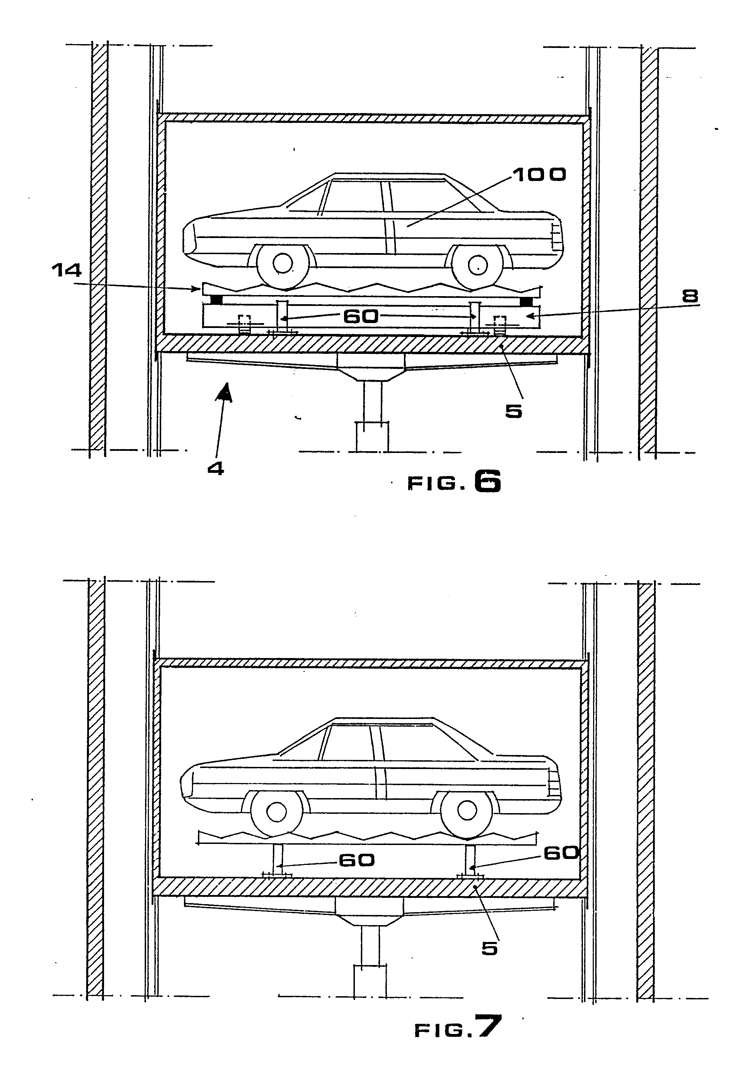

With reference to the said figures, 1 and 2 indicate the loading and unloading stations of a motor vehicle 100 to and from the storage system which comprises superimposed storeys S (e.g.: floors) of which two are shown in diagrammatic form in Figs. 2 and 4. The said floors communicate with one another by means of vertical chambers 3 (two shafts, for example) in which suitable intermittent conveying means are located, composed of known hoists 4, featuring platforms 5: see Figs. 6 and 7.

Each floor is divided up into storage areas 6 that can be laid out in any manner, for example in rows separated by a passageway 7.

8 indicates a carriage fitted with known means, not illustrated, designed to drive the wheels of the carriage in at least two directions at right angles to one another; the carriage is guided by suitable known means in the various different floors, such as, for example, rails or magnetic guides embedded in the floors.

The carriage features a loading surface 8a which can be moved using known means, not illustrated, from a raised position H (shown by the broken line in Fig, 5), to a lowered position A.

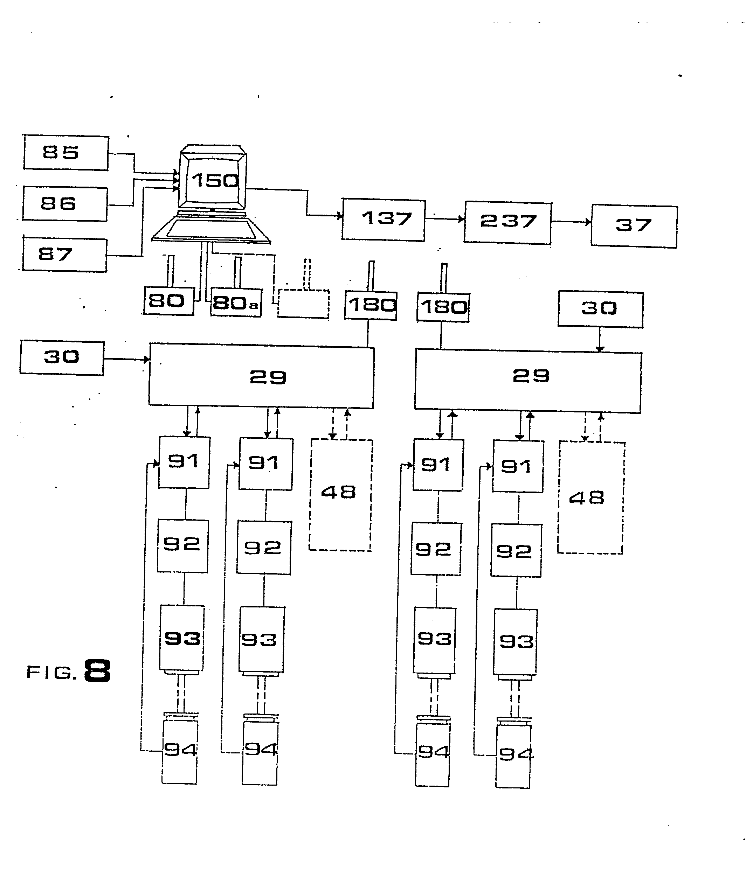

The motor means for driving the wheels and conveying means of the loading surface are coupled to a computerised peripheral unit shown in abstract form by 29 in Fig. 8.

The position of the carriage in the storage system is monitored (following coordinates by means of suitable sensors; to be precise, sensors 87 in the storage areas 6, sensors 31 in the passageways, sensors 48 in the portions of the floors S situated immediately beside the shafts 3, and, finally, sensors 85 and 86 in the loading 1 and unloading 2 stations respectively.

The information coming from the said stations is transmitted in a known manner to both unit 29 and the central computerised unit 150 (Fig. 8), which will be spoken of in greater detail below.

First and second means 11 and 12, both comprising a pair of roller strips 20 , are situated in the spaces between station 1 and 2 and the openings giving access to the aforementioned shafts 3, these means touching surfaces that are coplanar to stations 1 and 2 in the example illustrated.

A pile or magazine 13 of flat metal storage surfaces 14, each having one corrugated face; is located beside the said means 11, 12; the said storage surfaces are of a size enabling them to be supported by the aforementioned roller strips 20.

Suitable means 15 (comprising, for example, an electromagnet 16 mounted in an overhead crane 17 which moves it along the three cartesian coordinates) enable a storage surface 14 to be conveyed from the pile 13 to the roller strip 20 of one or the other of the above-mentioned loading and unloading stations, or to remove a storage surface 14 located on the roller strip 20 of any one these stations in order to convey it to the pile 13.

A pair of roller strips 18 is situated on top of each platform 5 of the hoists 4. Whenever the related platform is positioned stopped in the corresponding (loading 1 or unloading 2) station, these rollers strips 18 are aligned with aforesaid roller strips 20.

Every storage area 6 features four spacers 19, located at the corners of a rectangle, and spaced apart in such a way as to enable the carriage 8 to be freely inserted between them; the height of the said spacers being between the minimum and maximum levels of the loading surface 8a of each carriage 8 in its raised H and lowered A positions respectively.

It is possible to obtain various different embodiments of the storage system that is the subject of the present invention.

A first embodiment only features carriages 8 on the floors having storage areas 6.

In this case it is necessary for the height of the roller strips 18 to permit the insertion of a carriage 8 beneath the storage surface 14 resting upon them, with, obviously, this carriage 8 being supported by the platform 5 that works in conjunction with the said roller strip 18; it also, furthermore, being necessary for th rollers strips 20 and 18 to be motorised.

In the above mentioned embodiment, the loading stage takes place as follows:
- a loading surface 14 is positioned on the roller strip 20 of station 1;
- a motor vehicle 100 is positioned on the aforesaid storage surface;
- the fact that the roller strips 20 and 18 are motorised enables the storage surface 14 - motor vehicle 100 complex to be conveyed onto the latter rollers strips, that is to say into the corresponding hoist 4;
- the hoist conveys the above-mentioned complex to the corresponding level of a floor in which at least one storage area 6 is vacant;
- a carriage 8, with related loading surface 8a in the lowered position, moves out over the platform 5 below the storage surface 14; the said loading surface 8a bringing itself into the raised position H, moves up aginst the said storage surface, lifting it;
- the aforesaid carriage conveys the above-mentioned complex from the roller strip 18 to the corresponding storage area 6, where the storage surface is positioned resting upon the spacers 19, due to the loading surface 8a of the carriage having been lowered.

A motor vehicle is unloaded from the storage system in the reverse manner to that described above.

Unloading is optimised by positioning the motor vehicle 100 in the station 2 so that its front part faces forwards, that is to say towards the exit; this can be obtained by, for example, installing a carriage that can, when required, rotate through ninety degrees around its vertical axis.

When simultaneous loading and unloading operations are envisaged, the entering motor vehicles are directed to the loading station 1, whilst the outcoming motor vehicles leave from the unloading station 2.

In cases of heavy incoming traffic, it is possible to use both stations 1 and 2 (and their related hoists) to load the vehicles into the storage system; this can be effected in acceptable technical times due to the fact that the system makes use of flat loading surfaces 14 and a pile 13 of these loading surfaces, operating with a limited number of carriages since the latter are only employed on those floors featuring the storage areas 6.

The same observations hold for situations in which there is an unusually high level of outgoing traffic.

The incorporation of further motorised roller strips (similar to the roller strips 20 located in the stations 1 and 2) for the various different floors S makes it possible to convey the storage surface - vehicle complex to and from the hoists without using the carriages; this enabling one to dispense with the platforms 5 on the hoists, such that the dimensions of the latter need only be determined in relation to the maximum number of such complexes a hoist is able to convey at the same time; this is another embodiment of the present invention.

The advantages conferred by the use of flat storage surfaces 14, a pile 13 of these storage surfaces (with related means 15) and the use of spacers 19 in every storage area 6, are not diminished should the aforementioned rollers strips not be used.

In other words, there is another possible embodiment of the present invention in which a carrage 8 is positioned in station 1 in order to receive, through the action of means 15, a storage surface 14 upon which a motor vehicle 100 will be positioned.

The said carriage, with the storage surface - motor vehicle complex resting on its related loading surface, is then conveyed onto the platform 5 (see Fig. 6) of the corresponding hoist which conveys it to a floor S; the same carriage subsequently positions the storage surface 14 onto the spacers 19 in a vacant storage area in exactly the same manner as described above

A further embodiment of the invention includes at least one carriage 8 that is positioned in station 1 in order to receive, through the action of means 15, a storage surface 14 upon which a motor vehicle 100 will be positioned.

The carriage and related storage surface - motor vehicle complex is conveyed onto the platform 5 of the hoist, where the complex is positioned resting upon suitable supports 60 (see Fig. 7).

The carriage subsequently leaves the hoist, enabling the latter to convey the aforementioned complex to a floor S having a vacant storage area 6. A carriage 8, that operates on this floor alone, withdraws the above-mentioned complex from the hoist in order to convey it to a vacant storage area 6, positioning it on the spacers 19 in this storage area.

The transfer of a motor vehicle (to be precise a motor vehicle - storage surface complex) from a storage area 6 to the unloading station 2 takes place in the reverse manner to that described above.

With reference to Fig. 8, 150 shows a computerised central unit which receives the information coming from sensor 85 (whether an article, e.g.: motor vehicle, is present in the loading station 1, or not ), sensor 86 (whether an article is present in the unloading station 2, or not ), and sensors 87 (storage area vacant, or occupied by a storage surface 14 - article 100 resting on the storage surface complex).

Unit 150 uses an output interface 137 and device 237 to control a motor 37 which drives the hoists; the device 237, or "driver", enables the motor 37 to be connected to and disconnected from its related power source.

Unit 150 uses receiving and transmitting means 80 (located in a first floor S), 80a (located on a second floor S), and so on for the remaining floors, that are tuned with corresponding receiving and transmitting means 180 mounted on the carriages 8 to communicate electrically with the peripheral units 29 mounted on these same carriages. Two peripheral units 29 for two carriages are illustrated purely by way of example in the case in question.

Each peripheral unit 29 receives the information from sensor 30, (operating in conjunction with sensors 31 in order to identify the cartesian coordinates of the carriage on its related floor), and sensor 48, which detects the coplanarity between the floor in question and a platform 5 that is in a stationary position in shaft 3.

The activating means for the wheels of the carriage and for the loading surface of the latter are shown as 93 in Fig. 8, indicating an actuator; the actuator 93 is controlled by a "driver" 92, which enables the actuator to be connected to and disconnected from a power source (e.g. batteries) mounted on the carriage; the "driver" 92 is controlled by signals from the unit 29 (which is in its turn controlled by the signals coming from the central unit 150); a suitable input/output interface 91 is connected between the "driver" 92 and unit 29.

The driveshaft of every actuator 93 features a position transducer (or "encoder") 94 which is electrically connected to interface 91.

The manner in which the storage system is controlled emerges clearly from that stated above. The embodiment of the invention shown in Fig. 6 will be considered purely by way of example. This is the embodiment in which the carriage withdraws the storage surface - motor vehicle complex from station 1, and in which the carriages are illustrated purely by way of example in the case in question.

Each peripheral unit 29 receives the information from sensor 30, (operating in conjunction with sensors 31 in order to identify the cartesian coordinates of the carriage on its related floor), and sensor 48, which detects the coplanarity between the floor in question and a platform 5 that is in a stationary position in shaft 3.

The activating means for the wheels of the carriage and for the loading surface of the latter are shown as 93 in Fig. 8, indicating an actuator; the actuator 93 is controlled by a "driver" 92, which enables the actuator to be connected to and disconnected from a power source (e.g. batteries) mounted on the carriage; the "driver" 92 is controlled by signals from the unit 29 (which is in its turn controlled by the signals coming from the central unit 150); a suitable input/output interface 91 is connected between the "driver" 92 and unit 29.

The driveshaft of every actuator 93 features a position transducer (or "encoder") 94 which is electrically connected to interface 91.

The manner in which the storage system is controlled emerges clearly from that stated above. The embodiment of the invention shown in Fig. 6 will be considered purely by way of example. This is the embodiment in which the carriage withdraws the storage surface - motor vehicle complex from station 1, and in which the carriage and related complex are subsequently conveyed, by means of the hoists, to the floor of the storage area selected, enabling the aforesaid complex to be positioned on the spacers of the above storage area by the carriage.

A motor vehicle 100 present in the loading station 1 is detected by sensor 85; unit 150 sends a control signal for a carriage 8, to be sent to station 1, normally sending the carriage able to reach it in the shortest time.

The carriage moves under the storage surface 14 upon which the motor vehicle 100 has been loaded; this being detected by sensors 30-31.

At this point unit 29 of the carriage in question activates the means for raising the loading surface 8a of the carriage, which move from position A to position X; in this way the storage surface - motor vehicle complex is lifted and consequently supported by the carriage.

The carriage - storage surface - motor vehicle group must be moved to a vacant storage area 6, selected by the central unit 150 upon the basis of the information sent by sensors 87. In cases where the storage area 6 selected is on a different floor S, the carriage and related storage surface - motor vehicle complex is, as a result of the activation of the motor means driving the wheels of the carriage, sent to the shaft 3

As soon as sensor 48 gives the enable signal, the above-mentioned group moves onto the corresponding platform 5 of the hoists 4, upon which it remains motionless until the platform is itself positioned coplanar to the floor of the storage area selected.

At this point the means for moving the carriage are activated once again, enabling the carriage to leave the platform and move into position in the storage area 6 selected. Sensor 87 signals the presence of the carriage in the storage area 6, this causing the means for moving the loading surface to be activated, so that the above-mentioned complex is positioned on the spacers 19. This enables the carriage to "slide out" from under the storage surface, which, together with the motor vehicle resting on it, remains positioned in the storage area 6 (Fig. 5).

The unloading of the motor vehicle from the storage system takes place in the reverse manner to that described above, sensor 86 informing the central unit 150 that the motor vehicle unloading stage has taken place.

Where the unloading of the motor vehicle is concerned, it should be emphasised that if the storage surface -motor vehicle complex to be conveyed to the station 2 is positioned beside and on the inside of another storage surface - motor vehicle complex, the carriage will temporarily convey the latter complex to a "dead zone" of the passageway, from which another carriage will convey it back to the previous position as soon as possible.

A motor vehicle can be positioned on the storage surface 14 in cases where the storage system is to be used as a car park, or for articles of different kinds, such as crates of food products to be stored at low temperatures, for example, in cases where the storage system is to be employed in industrial cold storage plants.

In the latter case, considering the considerable weight of the said crates (a storage surface can indeed receive two, four or more crates), chain conveyors can be installed in the passageways 7, to which the carriage can be coupled and decoupled in synchrony with the position of the latter; in this way power means work in conjunction with the independent means mounted on the carriage in order to ensure and optimize the movement of the latter.

The entry and exit of the carriage from the storage areas 6 can also be facilitated by corresponding chain conveyors to which the carriage can be coupled and decoupled.

The aforesaid chain conveyors should preferably offer the possibility of being operated manually aswell, this being advantageous should the conveyor's power plant go out of order.

It has been assumed that the central unit 150 and peripheral units 29 are connected by radio in the case in question; this form of connection can be substituted with (flexible) electric cables: in this case the peripheral units 29 can dispensed with.

In limited capacity storage systems, the computerised unit can be replaced with an electro-mechanical control unit that is connected by cable to the various different sensors and electro-mechanical means described above; a keyboard working in conjunction with the above-mentioned control unit enables the operator to control the loading and unloading stages of the articles in accordance with the salient points of the system described above. Should the central unit 150 develop a fault, a portable unit can be used, enabling the operator to stand beside any carriage and control the peripheral unit in order to unload the articles (e.g. cars) requested outside.

It is advisable to have several reserve carriages over and above what is considered to be the optimum number for operation of the storage system.

To summarise, the articles 100 are positioned, in station 1, on a corresponding storage surface 14, the article - storage surface complex is conveyed to a vacant storage area 6 where it remains until it is unloaded in station 2; all the conveying stages are effected by a carriage and are optimised due to the original design of the means in the present invention.

The design of the storage system as well as its operating means make it possible to use a computerised unit with all the advantages involved.

The present storage system minimises unused manouvring spaces and those spaces between the articles stored; this results in a larger capacity than that offered by known storage systems of the same overall dimensions ("cubage").

The time savings mentioned above, and the lower building and running costs of the storage system in comparison to known solutions constitute a further three advantages of the invention.

The invention is, furthermore, extremely versatile, being able to operate over floors that extend horizontally in any manner whatsoever, and over several floors that extend both upwards and downwards in any manner whatsoever; in addition to this, the efficiency of the storage system is not dependent upon any particular hoist layout, (such that they can be located in any area of the floors, and do not have to extend from one neighbouring or superimposed floor to another consecutively), nor are they limited to only one particular design, several different embodiments of the means themselves having indeed been proposed.

Furthermore, in storage systems used for cold storage, for example, the carriages may be operated in conjunction with auxiliary chain conveyors as described above, without this in any way compromising the efficiency or reliability of the solution proposed.

The storage system can be centrally controlled as a direct consequence of the original design of the operating means and other means operating in conjunction with them as described above. Finally, it is also possible to operate the carriages directly should the central unit 150 (or electro-mechanical control unit mentioned above) develop a fault, thus minimising the resultant problems; this is particularly advantageous in storage systems used as car parks.

It is understood that the description supplied herein is solely un unlimited example such that possible variations in the construction details will not effect the protective framework afforded to the invention as claimed hereafter.

## Claims

1) Automatic handling multi-storey storage system for articles of different types and motor vehicles in particular, characterised by the fact that it includes: a fixed load-bearing structure comprising several superimposed storeys (S) that communicate with one another by means of vertical chambers (3), with one of the aforesaid storeys having access from and to the outside by means of two stations (1, 2), respectively for loading and unloading articles (100) into and from the aforesaid storage system, located in a raised position in relation to the said storey, the said storeys being divided into storage areas (6) for receiving the articles which are positioned on either side and/or to one side of corresponding passageways (7); a series of carriages (8), with each carriage featuring independent means for driving it in any direction, as well as means for moving the related loading surface (8a) between two extreme positions, raised (H) and lowered (A) respectively; a large number of storage surfaces (14) equal to at least the same number as there are of the said storage areas (6) above; conveying means (4) situated in the said vertical chambers, that can be moved in both directions in the vertical plane, designed to form platforms (5), with the said conveying means being driven intermittently to position the related platforms (5) so that they are coplanar to the abovementioned storeys (S); first and second sensor means (30, 31) for the abovementioned carriages and aforesaid passageways respectively, that are designed to monitor the coordinates of each carriage; third sensor means (87) for monitoring the presence of articles in the said storage areas; fourth and fifth sensor means (85, 86) for detecting the presence of articles in the said stations (1, 2); sixth sensor means (48) for monitoring the coplanarity of the said platforms (5) to the aforesaid storeys (S); a central computerised unit (150) that works in conjunction with the said sensors and is designed to control the aforesaid means fitted to each carriage, as well as the above-mentioned conveying means.

2) Storage system as in claim 1, characterised by the fact that the above-mentioned storage surfaces (14) are flat, by the fact that it includes first and second means (11, 12) situated in the said loading and unloading stations, that are designed to support corresponding storage surfaces (14), both being designed so that a carriage with related loading surface (8a) in the lowered position (A), may be inserted beneath the storage surfaces supported by them, by the fact that each of the said storage areas (6) is fitted with fixed spacers (19), which permit a carriage a to be inserted between them with its loading surface positioned at a height between the maximum and minimum levels reached when in its raised and lowered positions respectively, by the fact that it features at least one pile (13) of the said storage surfaces (14) beside the said stations, andby the fact that it includes activating means (15), controlled by a computerised central unit (150), for conveying one storage surface at a time from the said stations (1, 2) to the aforementioned pile, or, vice versa, from the latter to the aforesaid stations (1, 2).

3) Storage system as in claim 2, in which the above-mentioned conveying means take the form of hoists, characterised by the fact that the said hoists feature third means (18, 60) above every platform, which are designed to receive, resting upon them, at least one storage surface (14) upon which a corresponding article (100) is positioned, with the said third means being positioned, in relation to the corresponding platform (5), at a height between the maximum and minimum levels reached by the loading surface (8a) of each carriage (8) when in its raised position (H), and lowered position (A), respectively.

4) Storage system as in claim 2, in which the above-mentioned conveying means take the form of hoists characterised by the fact that the said first and second means are motorised, and by the fact that the said hoists feature third motorised means (18) above every platform, designed to receive, resting upon them, at least one storage surface (14) upon which a corresponding article (100) is positioned, with the said third means being positioned, in relation to the corresponding platform (5), at a height between the maximum and minimum levels reached by the loading surface (8a) of each carriage (8) when in its raised position (H), and lowered position (A), respectively.

5. Storage system as in claim 2, in which the aforementioned conveying means take the form of hoists characterised by the fact that the latter feature pairs of third motorised means (18) that are spaced apart from one another by the same distance as the said storeys, designed to recieve a storage surface - article complex resting upon them, and by the fact that every storey features fourth motorised means, positioned immediately beside the said vertical chambers, designed to receive or convey the said complex from and to the said third means, with the said fourth means being positioned, in relation to the corresponding storey, at a height between the maximum and minimum levels reached by the loading surface (8a) of each carriage (8) when in its raised position (H), and lowered position (A), respectively.

0 277 464

FIG.1

FIG.5

FIG.3

FIG 2

FIG.4

100

14

8

60

5

4

**FIG. 6**

60

60

5

**FIG. 7**

FIG. 8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-3 395 815 (JOHNSON) <br> * Column 5, lines 29-65; column 7, line 35 - column 8, line 69; column 13, line 65 - column 15, line 20; column 17, line 6 - column 23, line 47; column 52, line 20 - column 62, line 75; column 76, line 48 - column 82, line 14; figures * <br> --- | 1,5 | E 04 H 6/22 |
| A | FR-A-2 114 000 (SCHÜRMANN) <br> * Page 3, lines 3-29; page 4, lines 10-28; figures * <br> ----- | 1,3,5 | |

TECHNICAL FIELDS SEARCHED (Int. Cl.4)

E 04 H
B 65 G

The present search report has been drawn up for all claims

| Place of search | Date of completion of the search | Examiner |
|---|---|---|
| THE HAGUE | 21-05-1988 | LAUE F.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)